# EUROPEAN PATENT SPECIFICATION

(11) **EP 4 388 493 B1**
(45) Date of publication and mention of the grant of the patent: **30.09.2026**
(21) Application number: 22764696.5
(22) Date of filing: 09.08.2022
(51) Int. Cl.: G06T 7/00, G06T 7/11, G06T 7/174

(54) **IMAGE DIFFERENCE IDENTIFICATION**
BILDUNTERSCHIEDSIDENTIFIZIERUNG
IDENTIFICATION DE DIFFÉRENCES D'IMAGES

(30) Priority: 19.08.2021 GB 202111906
(43) Date of publication of application: 26.06.2024
(73) Proprietor: Iceye Oy, 02150 Espoo (FI)
(72) Inventor: FRIBERG, Tapio, 02200 Espoo (FI)
(74) Representative: Crowell & Moring U.K. LLP
(86) International application number: PCT/EP2022/072363
(87) International publication number: WO 2023/020896

(56) References cited:
- AHRAM SONG ET AL: "Change Detection in Hyperspectral Images Using Recurrent 3D Fully Convolutional Networks", REMOTE SENSING, vol. 10, no. 11, 17 November 2018 (2018-11-17), pages 1827, XP055675693, DOI: 10.3390/rs10111827
- MARETTO RAIAN V ET AL: "Spatio-Temporal Deep Learning Approach to Map Deforestation in Amazon Rainforest", IEEE GEOSCIENCE AND REMOTE SENSING LETTERS, IEEE, USA, vol. 18, no. 5, 28 April 2020 (2020-04-28), pages 771 - 775, XP011851491, ISSN: 1545-598X, [retrieved on 20210421], DOI: 10.1109/LGRS.2020.2986407
- ZHU YUE ET AL: "Multitemporal Relearning With Convolutional LSTM Models for Land Use Classification", IEEE JOURNAL OF SELECTED TOPICS IN APPLIED EARTH OBSERVATIONS AND REMOTE SENSING, IEEE, USA, vol. 14, 1 February 2021 (2021-02-01), pages 3251 - 3265, XP011847273, ISSN: 1939-1404, [retrieved on 20210326], DOI: 10.1109/JSTARS.2021.3055784

## Description

### Technical Field

The present invention relates to identifying differences across a plurality of images. In one possible implementation, some embodiments of the present invention may be used to identify changes over time in a target or environment by identifying differences between a plurality of images of said target or environment.

### Background

In many fields of image analysis, it is desirable not only to analyse images in isolation but also to identify differences across a plurality of similar or linked images to obtain additional information that is not available from simply analysing each image separately. For example, identifying changes in a series of images of the same subject captured at different time steps may provide an owner of the images with information about how the subject of the image changes over time. This may find applications in many technical areas, one of which is environmental analysis of images generated from data acquired by one or more satellites. In other contexts, similar images of the same may be collected using a range of different techniques - for example, the images may be captured using imaging signals of different wavelengths to capture one or more of an optical image, a radar image, a microwave image, an infrared image, a UV emission image, or an X-ray image. Differences between such images may provide information about properties of the imaged subject, such as the density, chemical composition, refractive index, and/or spectral properties such as absorption and/or reflection coefficients.

When attempting to identify differences across a plurality of images, there are two types of resolution to be considered. Firstly, it may be desirable to resolve features within each image, this can be considered to be akin to a spatial resolution. Additionally or alternatively, it may be desirable to resolve variations between images, this can be considered to be akin to a temporal resolution. Simultaneously achieving both high spatial and high temporal resolution leads to a very large memory requirement. As a consequence, methods for identifying differences across a plurality of images with a high spatiotemporal resolution requirement can impose an undue burden on a user's computing resources, both in terms of the amount of memory storage needed, and the amount of processing time required to implement the method.

AHRAM SONG ET AL, in "Change Detection in Hyperspectral Images Using Recurrent 3D Fully Convolutional Networks", REMOTE SENSING, (20181117), vol. 10, no. 11, doi:10.3390/rs10111827, page 1827, discuss hyperspectral change detection using deep-learning networks. A 3D fully convolutional network and a convolutional long short-term memory "ConvLSTM" are used for remote-sensing change detection.

The embodiments described below are not limited to implementations which solve any or all of the disadvantages of the known approaches described above.

### Summary

This Summary is provided to introduce a selection of concepts in a simplified form that are further described below in the Detailed Description. This Summary is not intended to identify key features or essential features of the claimed subject matter; variants and alternative features which facilitate the working of the invention and/or serve to achieve a substantially similar technical effect should be considered as falling into the scope of the invention.

The invention is defined as set out in the appended set of claims.

In a general sense, the present disclosure provides a method of identifying changes across a plurality of images using a system of a convolutional neural network (CNN) encoder connected with a convolutional Long Short-Term Memory "ConvLSTM" network. In this way, the methods and systems set out herein achieve a method of change identification with both high resolution within individual images and high resolution between different images whilst reducing the memory requirement.

ConvLSTM networks are well known in the art and examples are described in A Machine Learning Approach for Precipitation Nowcasting by Xingjian SHI et al in Advances in Neural Information Processing Systems 28 (NIPS 2015) ISBN: 9781510825024, and Effects of Different Activation Functions for Unsupervised Convolutional LSTM Spatiotemporal Learning by Elsayed et al in Advances in Science Technology and Engineering Systems Journal, April 2019.

In a first aspect, there is provided a computer-implemented method for identifying one or more changes across a plurality of images, the method comprising the steps of: receiving, at a convolutional neural network (CNN) encoder, CNN input data comprising data associated with each pixel of each of the plurality of images; propagating the CNN input data through the CNN encoder to generate a plurality of feature maps, wherein each feature map comprises a feature classification of each pixel of a respective image of the plurality of images according to a feature classification scheme, wherein the feature classification scheme is generated by the CNN encoder based on training data; receiving, at a ConvLSTM network, ConvLSTM input data comprising the plurality of feature maps generated by the CNN encoder; propagating the ConvLSTM input data through the ConvLSTM network to generate a change map, wherein the change map comprises change data indicative of one or more changes across the plurality of images.

In this way, the one or more changes across the plurality of images may be identified based on the change map.

In another aspect, there is provided a computing system configured to identify one or more changes across a plurality of images by implementing any of the methods described here, the system comprising: a convolutional neural network (CNN) encoder configured to receive, at an input of the CNN encoder, CNN input data comprising data associated with the plurality of images, and propagate the CNN input data through the CNN encoder to generate a plurality of feature maps, wherein each feature map comprises a feature classification of each pixel of a respective image of the plurality of images according to a feature classification scheme, wherein the feature classification scheme comprises a plurality of classifications and is generated by the CNN encoder based on training data; a ConvLSTM network; and a data connection link between the CNN encoder and the ConvLSTM network, wherein the ConvLSTM network is configured to: receive, at an input of the ConvLSTM network, via the data connection link, ConvLSTM input data comprising the plurality of feature maps generated by the CNN encoder, and propagate the ConvLSTM input data through the ConvLSTM network to generate a change map, wherein the change map comprises change data indicative of one or more changes across the plurality of images.

In other words, the computing system may be configured to implement any of the methods described here. In some embodiments, the computing system may be contained within one computing apparatus, for example stored as computer-executable instructions on a computer-readable medium to be executed by a processor.

In another aspect, there is provided a method of training any of the computing networks and/or systems described here. The method comprises: providing training data comprising data representative of a first and second feature classification respectively; pre-training the CNN encoder to generate preliminary maps based on the data representative of the second feature classification and the output of the CNN encoder; and training both the CNN encoder and the ConvLSTM network based on the data representative of the first feature classification and the output of the ConvLSTM network, wherein the trained CNN encoder is configured to generate the plurality of feature maps according to the feature classification scheme and the trained ConvLSTM network is configured to generate change maps.

In another aspect, there is provided an apparatus comprising a processor configured to perform any of the methods described here. The processor may be equipped with the components any of the computing networks and/or systems described here.

In another aspect, there is provided a computer program product comprising instructions which, when the program is executed by a computer, cause the computer to carry out any of the methods described here.

In another aspect, there is provided a computer-readable medium comprising instructions which, when executed by a computer, cause the computer to carry out any of the methods described here.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is issued for designing silicon chips, or for configuring universal programmable chips, to carry out desired functions.

The features and embodiments discussed herein may be combined as appropriate, as would be apparent to a person skilled in the art, and may be combined with any of the aspects of except where it is expressly provided that such a combination is not possible or the person skilled in the art would understand that such a combination is self-evidently not possible.

### Brief Description of the Drawings

Embodiments of the present invention are described below, by way of example, with reference to the following drawings.
**Figure 1** depicts a schematic of a satellite in orbit around the Earth collecting SAR image data.
**Figure 2a** depicts a schematic of a computing system configured to identify differences across a plurality of images according to some embodiments of the present invention.
**Figure 2b** depicts a schematic of the operation of the CNN encoder of the computing system of Figure 2a.
**Figure 2c** depicts a schematic of the operation of the ConvLSTM network of the computing system of Figure 2a.
**Figure 3** depicts a method of identifying differences across a plurality of images according to some embodiments of the present invention.
**Figure 4** depicts a method of training the computing system of Figure 2a according to some embodiments of the present invention.
**Figure 5** depicts the results of an example of identifying areas of deforestation in a forested environment imaged by SAR according to some embodiments of the present invention.
**Figure 6** depicts a computer configured to perform the method(s) of the claimed invention.

Common reference numerals are used throughout the figures to indicate the same or similar features.

### Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

The methods and systems described herein provide a means to identify changes across a plurality of images with a minimal loss in resolution - either the resolution within each image, or the resolution of variations between the images. For example, by generating a feature map for each image through the CNN encoder, the memory requirement of the method is vastly reduced with only a minimal loss of resolution within each image. This is because the CNN encoder is able to simplify image data which may comprise several data values per pixel to a feature map. Such a feature map encodes a single value to each pixel, wherein the value encoded to each pixel is representative of the feature classification accorded to said pixel by the feature map.

In some embodiments, the change data encoded in the change includes quantitative data indicative of the degree of the one or more changes across the plurality of images. As is discussed below, this allows a user to determine not only the presence of change, but also the extent of change across the plurality of images. Due to the simplification of the image data by the CNN encoder, this quantitative change analysis can be carried out with relatively modest memory and processing requirements.

In some embodiments, the change data includes a change classification of each pixel of a selected image of the plurality of images, wherein for a given pixel of the selected image, the change classification of said pixel is indicative of whether the feature classification for said pixel is the same as or different from the feature classification for a corresponding pixel of another of the plurality of images. In some embodiments, the change classification is a binary classification, i.e. a classification of whether or not change has happened. By encoding the change map generated by the ConvLSTM according to a change classification scheme, the memory requirement of the ConvLSTM may be further reduced. Importantly, in contrast with methods implementing conventional neural networks, the methods and systems described herein are focussed on detecting whether or not there have been changes across a plurality of images, and do not rely on attempting to visualise and display a precise evolution of the changes across said images, albeit that these changes may be displayed. Further, producing change maps simplifies the process of change identification analysis. Instead of producing a stack of data detailing extensive information related to each and every pixel of each and every image, the methods described herein may simply yield a dataset identifying for each pixel of one of the images, whether or not a change in feature classification for each pixel occurred across the plurality of images and, in some embodiments, the degree of said change.

In effect, by reducing the problem of change identification from a quantitative question (i.e. how much change there is between images) to a qualitative one (whether or not change has occurred across the plurality of images), the memory requirement of the method is vastly reduced allowing a computer implementing said method to maintain a high resolution in both the plurality of feature maps generated by the CNN encoder and by the change map generated by the ConvLSTM. The methods described here exploit the memory savings from the generation of feature maps and the change classification scheme of the change map to leverage a method that delivers high resolution with low memory and processing requirements. This would not be achievable without the particular configuration that combines the CNN encoder with the ConvLSTM network as provided for in the methods and systems described herein.

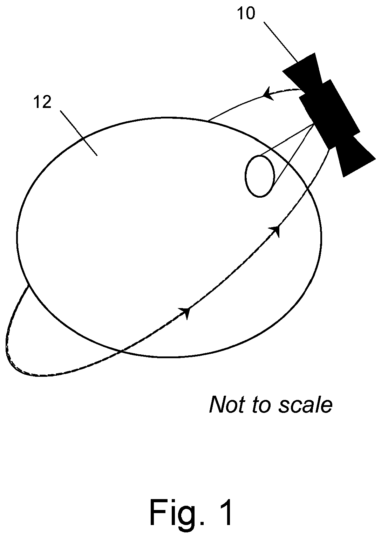

Figure 1 depicts a schematic of such a satellite 10 in orbit around the Earth 12 collecting SAR image data. The image data that is analysed according to the methods described here may be SAR image data collected by a satellite 10 in Low Earth Orbit (LOE) around the Earth.

The satellite 10 may be imaging a target, for example an area on the Earth 12, for example an arctic or Antarctic environment, a forest environment, or an urban environment or any other landscape of interest. The satellite 10 is in a repeating orbit and images the same target environment at least once per orbital period. As the satellite 10 successively images the target on each pass of its orbit around the Earth 12, it may add each successive image to a stack that forms a plurality of images. The identification of changes across images as described below can be applied each time a successive image is added to the stack of images to generate successive change maps so that the evolution of the landscape of interest can be tracked. This can be represented, in some examples, in a video or in a series of images depicting the successive change maps and their evolution over time.

As discussed above, in some embodiments, each of the plurality of images is generated by synthetic aperture radar imaging (SAR). SAR is particularly appropriate for use in satellite-based imaging systems because it is able to "see through" opaque atmospheric structures such as cloud cover and smoke from fires to directly image the surface of the Earth 12.

The methods described herein are applicable to a broad range of images. In particular, the methods find particularly beneficial application in the context of SAR imaging. SAR is usable to create two-dimensional images and/or three-dimensional reconstructions of imaged subject, such as landscapes.

As discussed above, in some embodiments, each of the plurality of images is generated from data acquired by one or more satellites.

Satellite images provide opportunities to collect image data on a wide variety of targets. For example, images generated from data acquired by a satellite, such as satellite-SAR images, may be used to image forested areas, urban environments, arctic or Antarctic environments, or other landscape. By applying the methods described herein to images generated from data acquired by a satellite, a user of said method may be able to easily identify the extent of environmental change of the imaged landscape. This may include, for example, identification and detection of deforestation/reforestation, urbanisation/counterurbanisation, landslip, ice floe growth/shrinkage and/or other environmental changes.

As discussed above, in some embodiments, each of the images generated from data acquired by a satellite is generated by a satellite in a low-earth orbit.

Satellites in a low-earth orbit may have short orbital periods of 1 hour or less, 90 minutes or less, 2 hours or less, 4 hours or less, 6 hours or less, 12 hours or less, 18 hours or less, or 1 day or less. A low-earth orbit can be from 160 kilometres to 1000 kilometres above the surface of the Earth. Examples of Earth-based observation satellites based on SAR accordingly can have orbits of between 450 kilometres and 650 kilometres above the Earth. In an example, satellite 10 may have an orbit that is 550 kilometres above the Earth's surface. At an orbit of 550 kilometres above the Earth, for example, the satellite is effectively traversing the ground at about 7.5 kilometres per second, or 27, 000 kilometres per hour. Most satellites in this orbit will traverse the Earth at a speed that is in the range of 7 to 8 kilometres per second. Applying the methods described herein to images generated from data acquired by one or more satellite in a low-earth orbit offers a user of the method a means for achieving high temporal resolution of changes in the imaged subject in addition to high spatial resolution. This provides the user with a more accurate detection and/or identification of spatiotemporal changes in the imaged subject.

In some embodiments, each of the plurality of images is an image of a common target captured at respectively different times, such that identifying the one or more differences across the plurality of images is equivalent to identifying a change over time of the subject.

In this way, the resolution of features within a single one of the plurality of images can be considered to be a spatial resolution, and the resolution of changes across the plurality of images can be considered to be a temporal resolution. The methods described herein allow for a detection of temporal changes of an imaged subject wherein high spatiotemporal resolutions are achieved without subjecting the computer implementing the claimed method to undue burden in terms of memory or processing requirements. This enables a user of any of the methods described here to detect and identify changes in the imaged subject with good spatial and temporal resolutions, even in devices, networks, or systems that have strict memory, storage, or processing restrictions.

In some embodiments, each of the plurality of images is coherent with each of the other images. Two images which are coherent with one another have been collected by respective imaging signals that have a fixed relationship.

As discussed in more detail below, phase information and in particular relative phase changes between images can be indicative of further information beyond that encoded in each image's respective preliminary map, or feature map. If said images are coherent, the information encoded in the phase changes between the images is suitable for enhanced coherent analysis including Coherent Change Detection (CCD), Digital Elevation Model (DEM) generation or differential Interferometric Synthetic Aperture Radar imaging (InSAR).

CCD detects changes between coherent images that are unlikely to be visible to the human eye. This is because the sensitivity of CCD is a mere fraction of the wavelength of the light used to collect the image. For example, in the context of radar imaging, CCD can resolve changes on the order of centimetres from a satellite-collected image. In the context of synthetic aperture radar (SAR) imaging, CCD provides a user with the ability to see miniscule differences between two SAR images with a resolution that exceeds that of "naked-eye" analysis.

DEM exploits subtle differences in position between two coherent images. The phase information associated with each pixel in each of the coherent images is then compared and variations relative to a reference plane are highlighted. In other words, in SAR imaging, phase information can be used to infer the height of a feature in the image relative to a reference "zero" height. DEM generation allows this height data to be obtained from the phase variation information via phase unwrapping to form a three-dimensional digital elevation model of the area.

InSAR can be thought of as a combination of the CCD and DEM techniques discussed above. In particular, InSAR facilitates the detection of very subtle changes in elevation over time. Images generated from data acquired by one or more satellites can be analysed with InSAR to detect changes on the order of a millimetre over the course of a month in an environment. This can be used to identify a range of dangerous and emerging situations ranging from land slippage to infrastructure collapse, such as the collapse of a dam or bridge.

In some embodiments, each of the plurality of images may be an image of an area of 10 square kilometres or more, 50 square kilometres or more, 100 square kilometres or more, 1000 square kilometres or more, 5000 square kilometres or more, or 10 000 square kilometres or more.

For example, each of the images may be of a 5 kilometre x 5 kilometre area or larger, a 10 kilometre x 10 kilometre area or larger, a 50 kilometre x 50 kilometre area or larger, or a 100 kilometre x 100 kilometre area or larger.

Even with subject sizes of such a large area, the methods described here allow for spatial resolution of differences across the plurality of images representative features of sizes of 0.1 metres or less, 0.5 metres or less, 1 metre or less, 5 metres or less, 10 metres or less, or 50 metres or less.

The methods and systems described herein, such as when applied to data collected by satellites and, in particular, to SAR images are particularly beneficial when applied to images that suffer from speckle patterns. Speckle patterns arise from the interference of a series of coherent wavefronts of an imaging signal. This physical phenomenon arises when a coherent imaging signal reflects from an imaging subject. Each of the many points of reflection of the signal (based on diffraction theory) operates as a source of a spherical wave. The plurality of spherical waves returning to the imaging device, e.g. satellite 10, mutually interfere to give rise to the characteristically 'fuzzy' speckle pattern.

Analysing images that suffer from speckle patterns can be very difficult because such images appear "noisy" to conventional algorithms used to identify objects contained within images. In effect, a speckle pattern causes there to be huge variability in the data associated with neighbouring pixels in an image and therefore the information content of a single pixel is very limited. As discussed below, the methods and systems disclosed herein provide a means to mitigate the issues introduced by such speckle patterns.

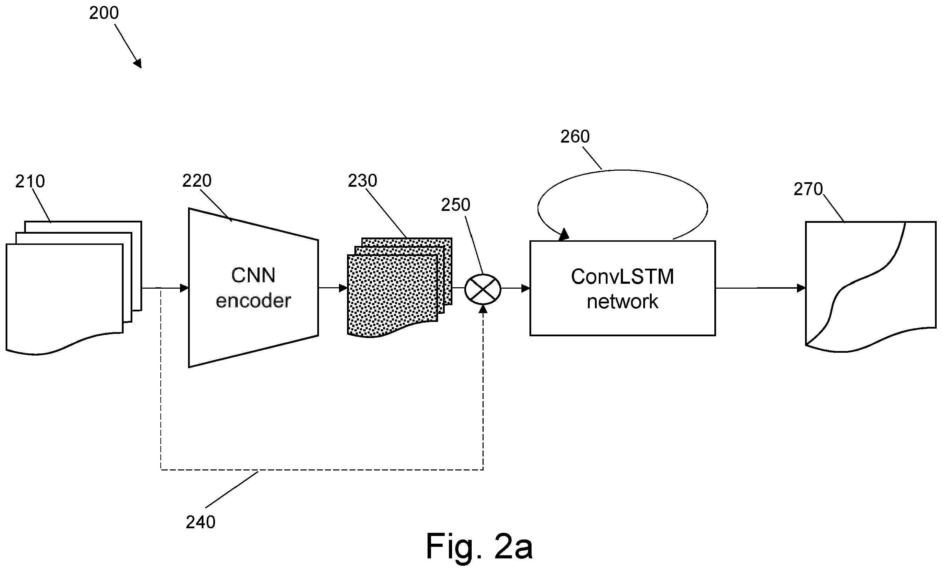

Figure 2a-c depicts a schematic of the operation of a computing system 200 and its constituent parts that may be configured to identify differences across a plurality of images.

Figure 2a depicts a schematic of a computing system 200 configured to identify differences across a plurality of images 210.

Data associated with a plurality of images 210 is input to the CNN encoder 220 and forms CNN input data. The convolutional neural network of the CNN encoder may comprise multiple convolutional layers such that as the data associated with the plurality of images 210 is propagated through the CNN encoder 220, the data respectively associated with each of the plurality of images 210 is convolved to generate a plurality of feature maps 230. Each feature map is respectively associated with one of the plurality of images 210.

In some embodiments, the data associated with each of the plurality of images 210 includes amplitude data indicative of one or more amplitudes respectively associated with each pixel of each of the plurality of images 210. The amplitude data may, for example, include data values indicative of the amplitudes associated with each of the R, G and B channels in an RGB image; or indicative of the amplitudes associated with each of the C, M, Y and K channels in a CMYK channel; or indicative of a grayscale value in a grayscale image.

In other words, the amplitude data may be encoded as RGB values. That is, there may be data values associated with each pixel that are indicative of each of the R, G and B values, and optionally the brightness. Additionally or alternatively, the amplitude data may be encoded as CMYK values. In other words, there may be data values associated with each pixel that are indicative of each of the C, M, Y and K values, and optionally the brightness. Additionally or alternatively, the amplitude may be indicated according to a grayscale. In other words, there may be a data value indicative of the shade of a pixel along the grayscale. Such a data value may be encoded as an 8-bit integer or in another appropriate format.

In some embodiments, the CNN input data further comprises phase data indicative of a respective phase value of each pixel of each image of the plurality of images 210, and the feature classification of each pixel of each image by its respective feature map 230 - as is discussed in more detail below - is based, at least in part, on said phase data.

When analysing two or more images for differences between them, relative phase changes between images can be indicative of further information beyond that encoded in each image's respective feature map. For example, in some examples, the phase value associated with each pixel of an image may be indicative of the phase of a signal used to collect/generate said image at a position corresponding to said pixel. In reflection-based imaging, the phase value may therefore be indicative of a distance between the pixel imaging detector and the surface of the target from which the signal was reflected to generate the image. Meanwhile, in transmission-based imaging, the phase value may be indicative of a density of a target through which the signal is transmitted.

In other words, phase data can be indicative of the optical path length of an imaging signal used to generate at least one of the plurality of images 210. For example, in the context of the SAR satellite system 10 of Figure 1, phase data is indicative of a relative height of an imaged target on the surface of the Earth 12.

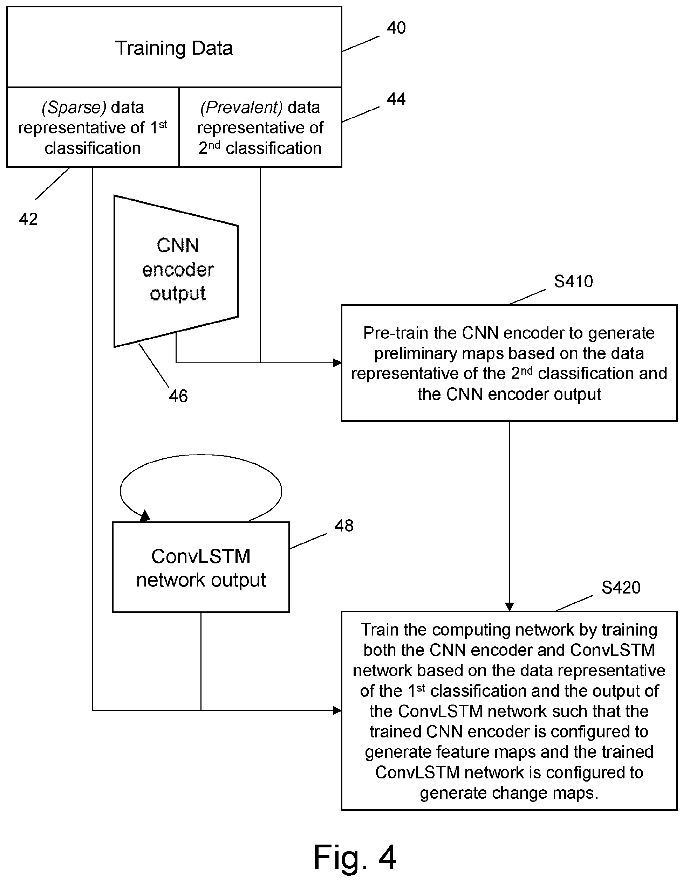

The CNN encoder 220 is trained to generate feature maps 230 from the data associated with each of the plurality of images 210. Each of the feature maps 230 comprises a feature classification of each pixel of a respective image of the plurality of images 210 according to a feature classification scheme. The feature classification scheme is generated by the CNN encoder 220 based on its training with training data. Further discussion of the training of the CNN encoder 220 may be found below in relation to Figure 4.

In some embodiments the feature classification scheme is a binary classification scheme configured to classify identified objects as belonging to either a first feature classification or a second feature classification.

By simplifying the feature classification scheme to a binary classification scheme, the memory requirements of the methods described here are reduced. In particular, a binary classification scheme allows each of the feature maps 230 to be encoded with a series of one-hot encoding processes or similar.

In some embodiments, the feature classification scheme includes feature classifications for forested vs. non-forested land, icy vs. non-icy terrain, inhabited settlements vs. uninhabited terrain, buildings vs. non-buildings in an urban environment, land vs. water, and/or any other suitable set of feature classifications. This may enable a user of computing system 200 to detect, identify, and/or measure various processes such as de-/re-forestation, ice (floe) growth/shrinkage, nomadic movements, (counter)-urbanisation, coastal erosion/development, and/or any other process that may be detected, identified and/or measured based on a suitable feature classification scheme.

In other words, in some embodiments, the plurality of feature classifications of the feature classification scheme includes: a forest classification indicating that a pixel classified as such is representative of forested land, and a non-forest classification indicating that a pixel classified as such is representative of land that is not forested, and the method further comprises: identifying areas of deforestation around forested land based on the identified differences across the plurality of images.

In this way, it may be possible to track the deforestation or reforestation of areas of interest to a user of the method. Such areas may include rainforests, such as the Amazon rainforest, which have been subject to logging operations and other deforestation projects. The areas may also include other forested areas that are subject to deforestation. Deforestation may include artificial deforestation such as logging projects (authorised or unauthorised), and/or may include natural means of deforestation such as fire. For example, the methods described here as applied to detecting and identifying areas of deforestation may track deforestation caused by wildfires, as in the forests of California, Australia, Canada, or similar.

Further, in some embodiments, the plurality of feature classifications of the feature classification scheme includes: an ice classification indicating that a pixel classified as such is representative of a region defined by or covered in ice, and a non-ice classification indicating that a pixel classified as such is representative of a region with no ice, and the method further comprises: identifying areas of ice expansion or recession in arctic or Antarctic environments over time based on the identified differences across the plurality of images.

In this way, it may be possible to track the shrinkage or growth of ice floes and/or glaciers in the Arctic and/or Antarctic circles. This may be used, for example, to provide information to governments, non-governmental organisations, climate scientists, and/or other users regarding the state of the polar ice caps and other icy environments as a means for tracking the impacts of climate change.

In some embodiments, the plurality of feature classifications of the feature classification scheme includes: a building classification indicating that a pixel classified as such is representative of a building, and a non-building classification indicating that a pixel classified as such is representative of a feature that is not a building, and the method further comprises: identifying construction and/or demolition sites within an urban environment over time based on the identified differences across the plurality of images.

In this way, it may be possible to track the development or demolition of urban environments. This may provide a user of the methods described here with a means of analysing urban spread/sprawl. In other words, a user of the methods described here as applied to this context may be able to detect and identify urbanisation and/or counterurbanisation in an area of interest.

In some embodiments, the plurality of feature classifications of the feature classification scheme includes: a habitation classification indicating that a pixel classified as such is representative of an inhabited site within an imaged area, and a non-habitation classification indicating that a pixel classified as such is representative of an uninhabited site within an imaged area, and the method further comprises: identifying the construction and/or removal of inhabited sites within an uninhabited or a partially inhabited environment over time based on the identified differences across the plurality of images.

In this way, it may be possible to track the movement of nomadic, or otherwise mobile, groups of individuals by determining where and when their habitation sites, or camps, are erected and dismantled.

In some embodiments, the plurality of feature classifications of the feature classification scheme includes: a land classification indicating that a pixel classified as such is representative of land, and a water classification indicating that a pixel classified as such is representative of a body of water, and the method further comprises: identifying coastal erosion or similar of the land by the body of water based on the identified differences across the plurality of images.

In this way it may be possible to track the progress of coastal erosion in areas of interest. Additionally or alternatively, it may be possible to determine the effectiveness of coastal defences in delaying the progress of coastal erosion by establishing the degree to which coastal erosion has been slowed after the introduction of coastal defences to an area of interest.

The method above, may be used in a variety of other situations in addition to those outlined above. For example, the method as applied to spatiotemporal resolution may be used to detect and identify areas of landslip in hills, cliffs, mountains and/or other areas susceptible to landslides and/or avalanches. This may be based, at least in part, on a change in phase between images indicating that the height of the ground has shifted. In alternative examples, the method may be applied to situations where each of the plurality of images is taken of the same subject and at the same time, but with each image being imaged by an imaging signal of a different wavelength. These imaging signals may be, for example and without limitation, optical signals, microwave signals, radio signals, infrared signals, ultraviolet signals and/or x-ray signals. A plurality of images generated by imaging signals of different wavelengths may be analysed according to the methods described herein to identify and/or detect spatial and spectral, or spatio-spectral variations across the plurality of images. Spatio-spectral difference identification and/or detection may be used in many situations. For example, such a method may be applicable to the identification of coronal mass ejections from the Sun or other solar activity.

The computing system 200 further comprises a skip connection 240. The skip connection provides a propagation route for a copy of the data associated with the plurality of images such that the CNN encoder 220 for said copy can effectively be skipped.

In the operation of a CNN encoder 220, the CNN is trained such that providing successive layers increases the number of operations performed by the neural network and therefore the CNN is able to deduce additional information from each of the plurality of images. This can, in some circumstances, if the training is ineffective, lead to errors in the feature map. By providing a skip connection and convolving data associated with each of the plurality of images with its respective feature map, any errors introduced through the operation of the CNN encoder 220 can be mitigated. This improves the reliability and accuracy of the final change map generated by the ConvLSTM network 260.

The output of the CNN encoder 220, i.e. each of the plurality of feature maps 230 is convolved with the data respectively associated with each of the plurality of images 210 by convolving unit 250. Convolving unit 250 convolves the data associated with each of the plurality of images 210 with its respective feature map 230 to generate ConvLSTM input data, i.e. data to be input into the ConvLSTM network 260. The ConvLSTM input data may be thought of as a plurality of convolved maps. The ConvLSTM network 260 is a recurrent neural network configured to convolve the ConvLSTM input data to generate a single change map 270. In other words, the ConvLSTM network 260 convolves each of the plurality of convolved maps with one another to generate the change map 270. Additionally, the ConvLSTM network 260 convolves data within each respective map of the ConvLSTM input data. In other words, the ConvLSTM network 260 is configured to convolve both between and within maps. For example, in an example where each of the plurality of images 210 is representative of an image of a common target imaged at respectively different times, the ConvLSTM network is configured to convolve data both spatially and temporally. The change map 270 may include a change classification of each pixel of a selected one of the plurality of images 210. This change classification of each pixel may be indicative of whether the feature map classification for said pixel is the same as or different from the feature map classification for a corresponding pixel of another of the plurality of images 210. Additionally or alternatively, the change map 270 may include quantitative change data indicative of the degree of the one or more changes across the plurality of images. For example, in the context of SAR imaging, the quantitative change data may be indicative of the extent to which the relative height of each imaged pixel has changed across the plurality of images 210.

In some embodiments, the change classification is a binary classification. As discussed above, binary classifications may be particularly efficient because they allow each pixel to be encoded with its respective change classification by a quick process of one-hot encoding or similar.

In some embodiments, the ConvLSTM input data further comprises phase data indicative of a respective phase value of each pixel of each image of the plurality of images 210, and propagating the ConvLSTM input data through the ConvLSTM network 260 includes convolving the phase data with the plurality of feature maps 230 to generate the change map 270.

As discussed above, phase information and in particular relative phase changes between images can be indicative of further information beyond that encoded in each image's respective feature map. By convolving the phase data with the plurality of feature maps 230 to generate the change map 270, the use of the phase information in determining the change data associated with each pixel of the change map 270 is enabled. The change data may include, optionally binary, change classifications associated with each pixel of the change map 270 and/or quantitative change data associated with each pixel of the change map 270. This increases the sensitivity of the ConvLSTM network 260, allowing the ConvLSTM network 260 to detect and identify changes across the plurality of images 210 that are encoded only, or partially, in the phase data.

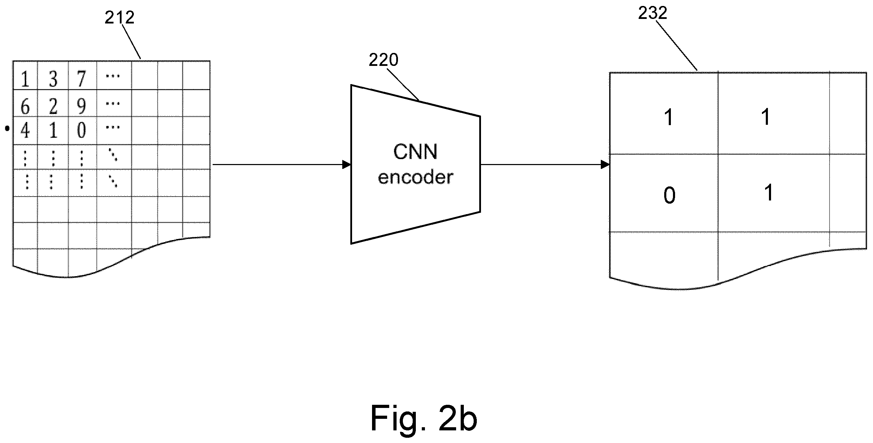

Figure 2b depicts a schematic of the operation of the CNN encoder 220 of the computing system 200.

For a given image 212 of the plurality of images 210, image data associated with image 212 is provided as CNN input data to the CNN encoder 220. The CNN input data is propagated through the layers of the CNN encoder 220 to generate a feature map 232, as described above. In the example depicted in Fig. 2b, there are nine data values associated with each of the pixels of image 212. The CNN encoder 220 convolves the data associated with image 212 to generate feature map 232 that has just one data value associated with each pixel. In the example depicted in Figure 2b, the data value associated with each pixel is part of a binary feature classification scheme. For example, in the context of a method to detect deforestation of a forest, the binary feature classification scheme could be that a value of "1" in the feature map 232 is indicative that the corresponding pixel of image 212 is representative of forested land while a value of "0" in the feature map 232 is indicative that the corresponding pixel of image 212 is representative of non-forested land.

The operation of the CNN encoder in the manner as described above with reference to Figure 2b provides a means for reducing the data content that must be processed to detect and identify changes across a plurality of images with only a minimal loss of the (spatial) resolution within each image 212 of the plurality of images 210.

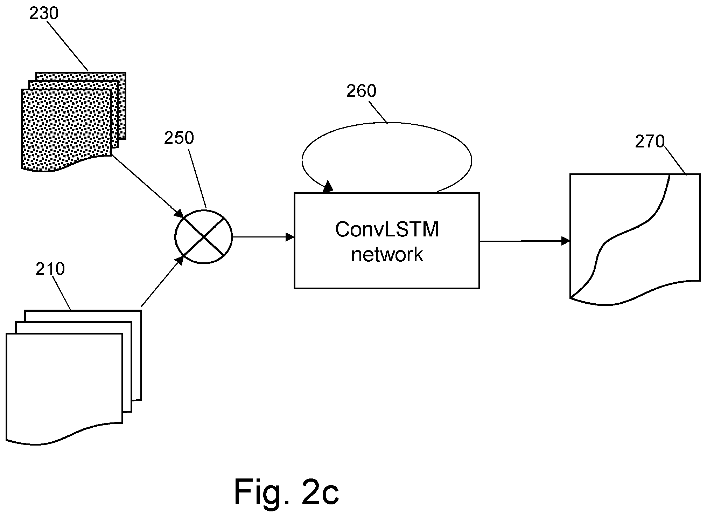

Figure 2c depicts a schematic of the operation of the ConvLSTM network 260 of the computing system 200.

Convolving unit 250 convolves the data associated with each of the plurality of images 210 with its respective feature map 230 to generate the ConvLSTM network 260. For example the image 212 of Figure 2b is convolved with feature map 232 to generate a respective convolved map. Each of the convolved maps are then recurrently convolved by propagation through the ConvLSTM network 260 to generate the change map 270. As discussed above the change map 270 may, in some embodiments, comprise a binary change classification of each pixel of a selected image of the plurality of images 210 to enable the identification, detection and/or measurement of differences across the plurality of images 210.

Additionally or alternatively, the change map 270 may, in some embodiments, include quantitative change data associated with each pixel of a selected image that is indicative of the extent of change between said selected image and another one or more of the plurality of images 210.

The computing network system described here is configured to implement a method that can identify changes across a plurality of images with a minimal loss of resolution - either the resolution within each image, or the resolution of variations between the images. For example, by generating a feature map 230 for each image through the CNN encoder 220, the memory requirement of the system is vastly reduced with only a minimal loss of the resolution within each image. This is because the CNN encoder is configured to simplify image data which may comprise several data values per pixel to a feature map. Such a feature map encodes a single value to each pixel, wherein the value encoded to each pixel is representative of the feature classification accorded to said pixel by the feature map. Further, the ConvLSTM network 260 may be configured to encode the change map with quantitative change data indicative of the degree of the one or more changes across the plurality of images. Due to the simplification of the image data by the CNN encoder 220, this quantitative analysis can be carried out with relatively modest memory and processing requirements.

Additionally or alternatively the change map 270 may be encoded according to an, optionally binary, change classification scheme. In this way, the memory requirement of the ConvLSTM network 260 may also be further reduced. Importantly, in contrast with conventional computing systems and neural networks, the computing system described herein is configured to detect whether or not there have been changes across a plurality of images, and does not rely on visualising and displaying a precise evolution of the changes across said images, although this evolution may of course be display in some examples. Further, producing change maps 270 simplifies the process of change identification analysis. Instead of producing a stack of data detailing information related to each and every pixel of each and every image, the computing system described herein is simply configured to yield a single dataset for each change map 270 identifying for each pixel of one of the images, whether or not a change in feature classification for each pixel occurred across the plurality of images 210.

As discussed above, by reducing the problem of change identification from a quantitative question to a qualitative one, the memory and processing power required for the system described here to implement the methods described herein may be vastly reduced, without compromising the resolution of the change detection and/or identification that can be achieved by the system. This would not be achievable without the particular configuration that combines the CNN encoder 220 with the ConvLSTM network 260 as provided for in the computing networks described here.

Further, as mentioned above, the system described in relation to Figure 2 and the methods described herein are particularly advantageous for the analysis of images that suffer from speckle patterns, such as SAR images generated from data collected by satellites 10 in low-Earth orbit. Due to the large variation in the data associated with neighbouring pixels affected by speckle, it may be necessary to obtain a large amount of information contextual to each pixel. This contextual information could be spatial or temporal. For example, temporal contextual information can be obtained by repeatedly collecting image data on the same target using at high frequency. In the context of the satellites in low-earth orbit, this may be difficult because the satellite 10 can only image the target on the Earth 12 when it passes overhead. The alternative to temporal contextual information is spatial contextual information. Spatial contextual information can be obtained by capturing a field of view in each image that is much larger than the size of area of the one or more speckles affecting the image. For example, the area of the field of view may be 5 times or more, 10 times or more, 50 times or more, or 100 times or more larger than the area(s) of the one or more speckle patterns affecting the image. Such a field of view is much larger than that used in typical object identification algorithms due to the perceived computational cost of analysing such a large field of view.

However, CNN encoder 220 enables the computing system 200 to capture and process a large field of view in a memory efficient manner. In the context of SAR imaging systems, CNN encoder 220 may compress a large-area image 210 to a smaller feature map 230. For example, each of the plurality of images may have an area of 512x512 pixels that is compressed by the CNN encoder 220 to a respective feature map 230 with an area of 64x64 pixels. This represents an areal compression factor of 64. The person of ordinary skill in the art will understand that other images sizes and other areal compression ratios are possible. However, for context, comparable neural networks in the state of the art typically process images with a smaller area of, for example with an area of 299x299 pixels. This smaller area may not provide a wide enough field of view for the computing network 200 to mitigate the effects of speckle in high-resolution SAR images. In other words, CNN encoder 220 is configured to process images comprising 3 times or more the number of pixels of a comparable neural network employed in the state of the art. This large field of view allows the CNN encoder 220 to generate feature maps that are robust against the detrimental effects of speckle patterns that impact conventional object identification algorithms.

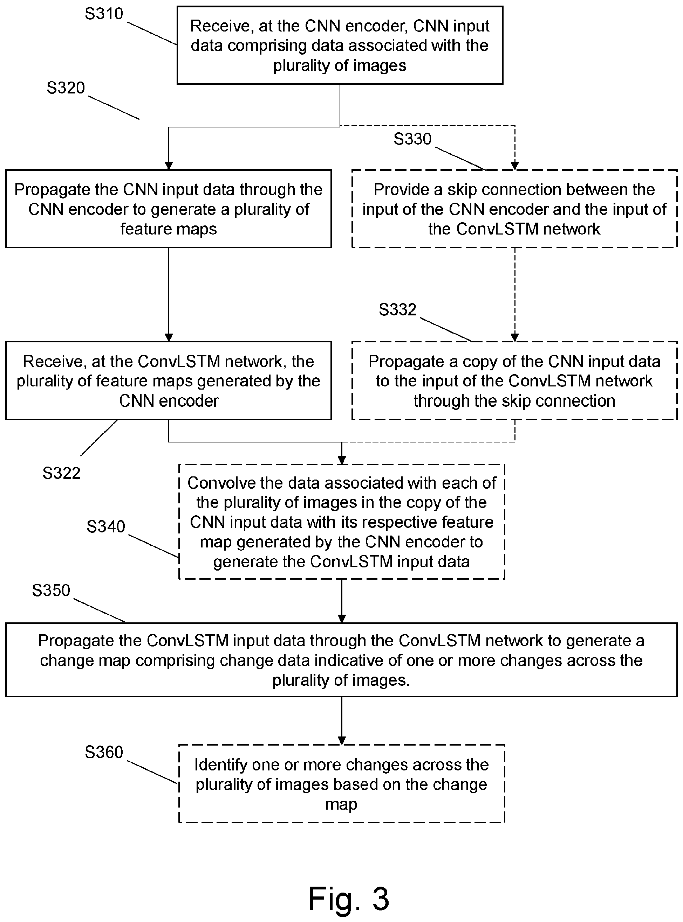

Figure 3 depicts a method of identifying differences across a plurality of images according to some embodiments of the present invention.

In operation S300, the CNN encoder 220 receives CNN input data comprising data associated with the plurality of images 210.

In operation S320, the CNN input data propagates through the CNN encoder 220 to generate a plurality of feature maps 230. Each of the plurality of feature maps 230 comprises a feature classification of each pixel of its respective image of the plurality of images 210 according a feature classification scheme generated by the CNN encoder based on training data.

In some embodiments, propagating the CNN input data through the CNN encoder 220 to generate the plurality of feature maps 230 includes compressing the CNN input data.

In this way, the memory storage requirements for a computer implementing any of the methods described here are lessened without compromising the resolution within each image. For a given image of the plurality of images 210, the feature map 230 may comprise a feature classification for each pixel of said image. In contrast, the raw image data may comprise multiple data values per pixel of the image. For example, in a traditional RGB image, there may be data values associated with each pixel that are indicative of each of the R, G and B values, and optionally the brightness. Alternatively, for CMYK images, there may be data values associated with each pixel that are indicative of each of the C, M, Y and K values, and optionally the brightness. In some images there may be further data values indicative of a saturation of the image. In some images there may be further data values indicative of a respective phase value associated with each pixel of the image. By simplifying the representation of each image to a feature map, the memory requirements of a computer implementing any of the methods described here are drastically reduced, thereby allowing for the methods to be implemented on a wider variety of computer-based systems and, in particular, in systems where there are stringent and demanding memory requirements on the computing device, system, and/or network.

In some examples, the data associated with each of the plurality of images may be encoded as complex data. In other words, the data may be encoded as one or more complex numbers. Each complex number may be considered to have a magnitude and an argument. The magnitude of a complex number may be representative of an amplitude value while the argument of a complex number may be representative of a phase value.

In some examples, the data associated with each of the plurality of images may include contextual data. This may include any type of metadata or other type of image data. For example, metadata may include a timestamp. This may be beneficial as it may allow the methods and systems disclosed herein to be sensitive to variations in the images caused by the time of day (for example, images of the same target captured at daytime and night-time may look different), or by seasonal variations (for example images of the same target may have different textural properties - they may be drier in summer months, wetter in spring months, etc.). The metadata may include information indicative of the local incidence angle of an imaging signal. This may be beneficial, particularly in the context of satellite-SAR, where there may be slight differences in the local angle of incidence of a same imaging target between different images in instances where the orbital period of the satellite 10 is not perfectly regular. In the context of images of a geographical feature, the metadata/image data may include weather data such as rain maps. This may be particularly beneficial when applied to SAR images as the moisture of the imaging target can have a significant impact on the resultant SAR image.

In operation S322, the ConvLSTM network 260 receives the plurality of feature maps generated by the CNN encoder 220.

In operation S330, a skip connection 240 is provided between the input of the CNN encoder 220 and the input of the ConvLSTM network 260.

In operation S332, a copy of the CNN input data is propagated through the skip connection 240 to the input of the ConvLSTM network 260.

Further, in operation S340, the data associated with each of the plurality of images 210 in the copy of the CNN input data is convolved with its respective feature map 230 (as generated by the CNN encoder 220) to generate ConvLSTM data. For example, this operation may be carried out by convolving unit 250.

In other words, the method further comprises: providing a skip connection between an input of the CNN encoder and an input of the ConvLSTM network; propagating a copy of the CNN input data to the input of the ConvLSTM network through the skip connection; and convolving each of the plurality of images in the copy of the CNN input data with its respective feature map generated by the CNN encoder, to generate the ConvLSTM input.

In operation S350, the ConvLSTM input data is propagated through ConvLSTM network 260 to generate a change map 270. Change map 270, as discussed above, may comprise an, optionally binary, change classification of each pixel of a selected image of the plurality of images 210, the change classification of said pixel being indicative of whether the feature classification for said pixel is the same as or different from the feature classification for a corresponding pixel of another of the plurality of images 210. Additionally or alternatively, change map 270 may comprise quantitative change data indicative of the degree of the one or more changes across the plurality of images 210.

Finally, in operation S360, one or more changes across the plurality of images based on the change map 270 are identified.

As described above, the method depicted in Figure 3 may be applied in a variety of contexts. For example, the method could be used to identify the extent and progression of deforestation processes, of ice (floe) growth/shrinkage, of urbanisation/counterurbanisation, of coastal erosion/development, of nomadic movements, of solar activity and/or of any other process that can be suitably identified by the methods described herein.

In general terms, each of the plurality of images 210 may be an image of a geographical area, and the feature classification scheme may include: a first feature classification indicating that a pixel classified as such is representative of the presence of a predetermined geographical feature; and a second feature classification indicating that a pixel classified as such is representative of the absence of the predetermined geographical feature, wherein the method further comprises: identifying areas where the presence/absence of the predetermined geographical feature changes based on the identified differences across the plurality of images.

Figure 4 depicts a method of training the computing system 200, as depicted in Figure 2a, according to some methods of the present invention.

In order to train the computing system 200 and in particular the CNN encoder 220, the CNN encoder may receive various inputs. The first input is training data 40. The training data 40 may be divided into two categories 42, 44. The first category is data representative of a first feature classification while the second category is data representative of a second feature classification.

In some embodiments, the first category 42 is data representative of the first feature classification and is comparatively scarce compared to the second category 44, which is representative of the relatively more prevalent second feature classification. For example, in the context of a method for identifying deforestation, the first category 42 may be representative of deforested land while the second category 44 may be representative of forested land, noting that in most cases of deforestation identifying the process of deforestation will require the detection of the expansion of relatively less prevalent areas of deforested land compared to the large areas of forests which are being deforested.

In other words, in some embodiments, the training data used to train the CNN encoder 220 comprises data representative of both the first and second feature classifications, and data representative of the first feature classification within the training data is scarce relative to data representative of the second feature classification. For example, the ratio of the amount of data representative of the first classification to the amount of data representative of the second classification within the training data may be 1: 5 or less, 1:10 or less, 1:50 or less, 1:100 or less, 1:500 or less, or 1:1000 or less.

The methods described herein from conventional computational approaches at least in that the method is directed specifically towards detecting and identifying changes across a plurality of images 210 as opposed to identifying specific or particular objects within an image. This means that in certain circumstances, for example images of forested land wherein a detected change is indicative of deforestation, it is possible to train the CNN encoder 220 to detect changes across a plurality of images 210 using training data 40 within which data indicative of deforested land is scarce relative to data indicative of forested land. The skilled person will recognise that this principle is equally applicable to many forms of image analysis directed towards detecting a change in a highly prevalent feature (or features) of the image wherein the change across the images is a change towards a relatively less prevalent feature (or features) of the image.

The second input to the training method is the output of the CNN encoder 46.

In some embodiments, as shown in operation S410, the CNN encoder 220 is pre-trained to generate preliminary maps based on data representative of the second, more prevalent, feature classification 44 and the CNN encoder output 46. This provides a coarse pre-training for the CNN encoder 220 so that the memory requirement for the fine-tune training of later operations can be accomplished with fewer computing resources. The preliminary maps generated by the pre-trained CNN encoder 220 may be any suitable mapping. For example the preliminary maps may be semantic maps or regression maps.

The third input to the training method is the output of the ConvLSTM network 48.

In operation S420, the overall model is refined by training both the CNN encoder 220 and the ConvLSTM network 260 based on the data representative of the first, more scarce, feature classification and the output of the ConvLSTM network 48. At the end of operation S420, the fully trained CNN encoder 220 is configured to generate the feature maps 230 based on the feature classification scheme that the CNN encoder 220 learns through the training process of operations S410 and S420. Further, at the end of operation S420, the fully trained ConvLSTM network 260 is configured to generate change maps. By implementing the training method depicted in Figure 4, the CNN encoder is trained to learn the characteristics of images that are indicative of both the first and second feature classifications without requiring large quantities of data representative of the first, relatively scarce, feature classification 42. The result of this training is a feature classification scheme based on the training data, upon which the feature classifications included in each feature map 230 generated by the CNN encoder 220 are based.

In other words, in some embodiments, the feature classification scheme is generated by training the CNN encoder 220, wherein training the CNN encoder 220 includes: pre-training the CNN encoder 220 to generate preliminary maps based on the data representative of the second feature classification 44 and the output of the CNN encoder 46; and training both the CNN encoder 220 and the ConvLSTM network 260 based on the data representative of the first feature classification 42 and the output of the ConvLSTM network 48.

In situations where the change to the image is based on a change in a small number of pixels relative to the total number of pixels, pre-training the CNN encoder 220 based on features with a prevalent second feature classification 44 and the output of the CNN encoder 46 provides a coarse training to the CNN encoder 220 that can be subsequently refined by training the CNN encoder 220 based on the output of the ConvLSTM network 48 and the first (target) feature classification 42 that is comparatively less prevalent than the second feature classification. This multi-stage training improves the efficiency of the training of the overall computing network 200. The improved efficiency can be considered by analogy to a multi-stage rocket. In the same way that a multi-stage rocket launch is more efficient than a single-stage rocket launch because each subsequent stage forms an effective boost to the previous stage, the multi-stage training of some embodiments of the methods described herein is more efficient because the first stage of pre-training trains the CNN encoder 220 to an approximate level of accuracy that is then refined by the second stage of training to the desired level of accuracy. Simply training the CNN encoder 220 according to the method of the second stage would consume a large amount of processing power and storage and is therefore undesirably inefficient.

In some embodiments, during the operation of training the computing network 200, weights of the CNN encoder 220 are frozen such that the pre-trained CNN encoder and the trained CNN encoder are configured with identical weights. This may be suitable in instances when there is a comparatively small amount of training data, for example 10 000 samples of training data or fewer, 1000 samples of training data or fewer, 500 samples of training data or fewer, 100 samples of training data or fewer, or 10 samples of training data or fewer.

In such instances, freezing the weights of the CNN encoder while the ConvLSTM network 260 is trained prevents the CNN encoder 220 from being "overfitted" - a common problem in the training of neural networks with scarce training data. In such instances the preliminary maps generated by the pre-trained CNN encoder will be of the same form as the feature maps 230 generated by the fully trained CNN encoder 220.

In some embodiments, during the operation of training the computing network 200, weights of the CNN encoder 220 are unfrozen such that the pre-trained CNN encoder and the trained CNN encoder may be configured with different weights. This may be suitable in instances when there is a comparatively large amount of training data, for example 10 samples of training data or more, 100 samples of training data or more, 500 samples of training data or more, 1000 samples of training data or more, or 10 000 samples of training data or more.

In such instances, due to the prevalence of training data, the training of the CNN encoder may be naturally robust against overfitting. Further, with large quantities of training data available, the accuracy of the overall computing system 200 may be improved by allowing the weights of the CNN encoder to be synergistically adjusted during training alongside nodes and weights of the ConvLSTM network 260. In such instances, if the weights of the fully trained CNN encoder 220 are different from the weights of the pre-trained CNN encoder then the preliminary maps generated by the pre-trained CNN encoder will not of the same form as the feature maps 230 generated by the fully trained CNN encoder 220.

As discussed above, in some embodiments the identification of changes across images as described below can be applied each time a successive image is added to the stack of images to generate successive change maps so that the evolution of the landscape of interest can be tracked. This can be represented, in some examples, in a video or in a series of images depicting the successive change maps and their evolution over time.

In other words, in some embodiments the plurality of images 210 comprises successive images and the method further comprises: propagating the ConvLSTM input data through the ConvLSTM network 260 and convolving the ConvLSTM input data respectively associated with each of the successive images with the ConvLSTM input data associated with a respectively preceding image to generate successive change maps 270, wherein each successive change map 270 is representative of a change between one of the plurality of images 210 and the a successive image.

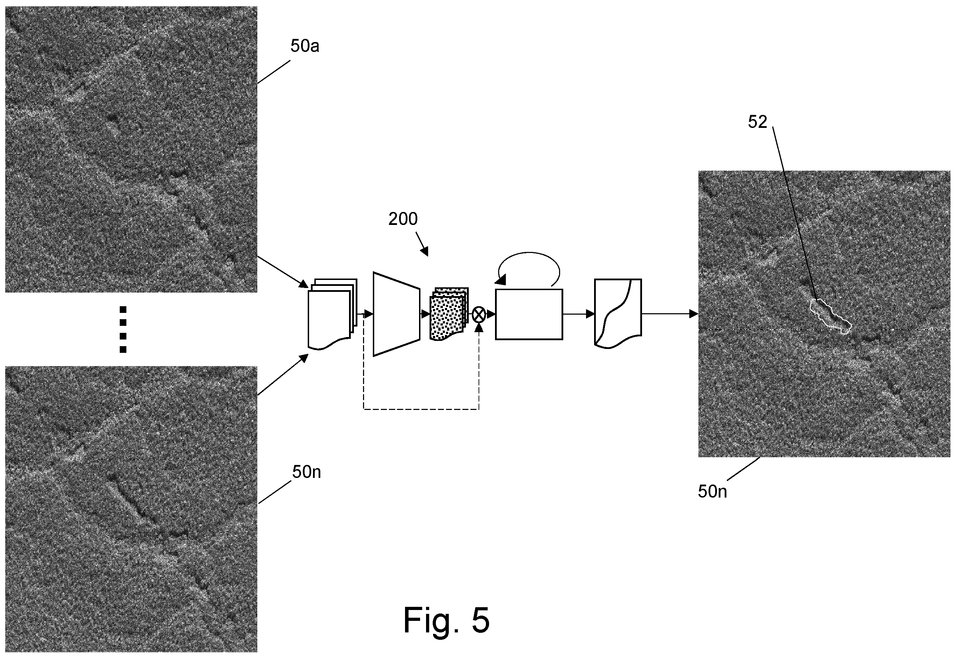

Figure 5 depicts the results of an example of applying the methods described to identifying areas of deforestation in a forested environment imaged by SAR.

SAR images 50a to 50n are collected by satellite 10 passing over a target forested environment. On each repeated orbit of the Earth 12, satellite 10 adds another image to the plurality of images 50 to create a stack of coherent images of the forested environment.

The plurality of images 50a to 50n and the data associated with said images is used as input to the computing system 200 of Figure 2a. CNN encoder 220 convolves the data associated with each of images 50a to 50n to generate a plurality of respective feature maps 230. Each feature map 230 comprises data indicative of a feature classification for its respective image according to a feature classification scheme that is determined based on the training of the CNN encoder according to the method depicted in Figure 4. In the example depicted in Figure 5, the feature classification scheme is a binary classification of either forested or non-forested land. The plurality of feature maps 230 and a copy of the data associated with each of the plurality of images 50a to 50n are convolved and propagated through the ConvLSTM network 260 to generate the change map 52. As depicted in Figure 5, the output returned from the computing system 200 is the change map 52 overlaid on the final image 50n of the image stack. In other examples, change map 52 may be overlaid on any of the other images amongst the plurality of images 50a to 50n, for example change map 52 may be overlaid on the first image 50a.

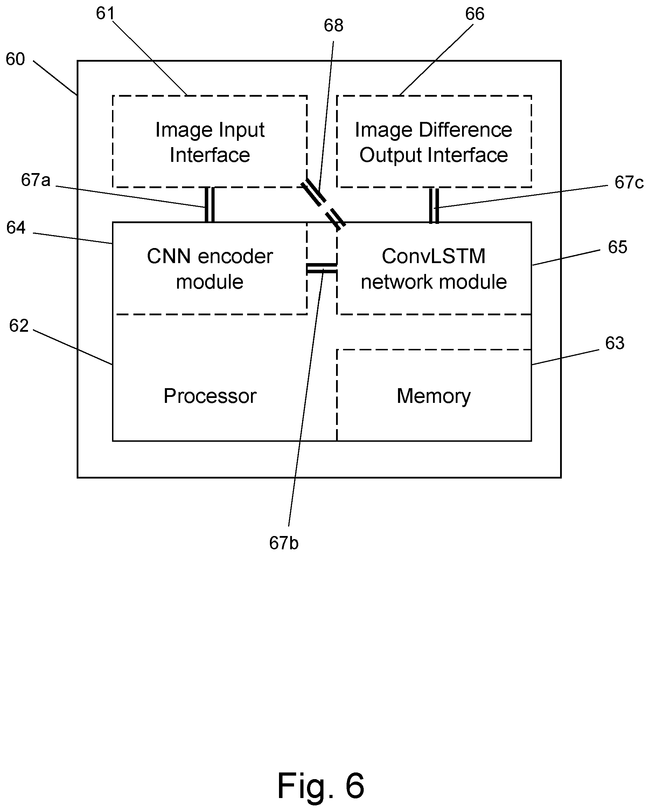

Figure 6 depicts a computer 60 or other suitable apparatus configured to perform any of the methods described herein.

Computer 60 comprises an image input interface 61, a processor 62 - the processor 62 including memory 63, CNN encoder module 64, ConvLSTM network module 65, image difference output interface 66, a plurality of data connection links 67a-c and skip connection link 68.

The computer receives image data corresponding to the plurality of images 210 at the image input interface 61. The data associated with the plurality of images 210 is transmitted to the CNN encoder module 64 of the processor 62 via the data connection link 67a. The CNN encoder module 64 is configured to operate as the CNN encoder 220 as depicted in Figures 2a and 2b. The output of the CNN encoder module 64, for example the plurality of feature maps 230 is transmitted to the ConvLSTM network module 64 of the processor 62 via the data connection link 67b. The ConvLSTM network module 64 is configured to operate as the ConvLSTM network 260 as depicted in Figures 2a and 2c. The CNN encoder module 64, and optionally the ConvLSTM network module 65 may be trained based on training data that is stored in the memory 63 of processor 62.

A copy of the data associated with the plurality of images 210 is transmitted to the ConvLSTM module via skip connection link 68. Skip connection link 68 is configured to provide skip connection 240 as depicted in Figure 2a.

The output of the ConvLSTM network module 65, for example change map 270, is transmitted to the image difference output interface 66 via data connection link 67c. Image difference output interface 66 provides a user of computer 60 with information identifying the differences between the plurality of images 210 received at the image input interface 61.

In the embodiment(s) described above, the computing system 200 may be implemented on a server. The server may comprise a single server or network of servers. In some examples, the functionality of the server may be provided by a network of servers distributed across a geographical area, such as a worldwide distributed network of servers, and a user may be connected to an appropriate one of the network servers based upon, for example, a user location.

The above description discusses embodiments of the invention with reference to a single user for clarity. It will be understood that in practice the computing system 200 may be shared by a plurality of users, and possibly by a very large number of users simultaneously.

The embodiments described above are fully automatic. In some examples a user or operator of the system may manually instruct some steps or operations of the method to be carried out.

In the described embodiments of the invention the system may be implemented as any form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media. Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray (RTM) disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs). Complex Programmable Logic Devices (CPLDs), etc.

Although illustrated as a single system, it is to be understood that the computing device 60 may be a distributed system. Thus, for instance, several devices may be in communication by way of a network connection and may collectively perform tasks described as being performed by the computing device.

Although illustrated as a local device it will be appreciated that the computing device 60 may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A computer-implemented method for identifying one or more changes across a plurality of images, the method comprising:
receiving (S310), at a convolutional neural network "CNN" encoder (220), CNN input data comprising data associated with each pixel of each of the plurality of images (210);
propagating (S320) the CNN input data through the CNN encoder (220) to generate a plurality of feature maps (230), wherein each feature map comprises a feature classification of each pixel of a respective image of the plurality of images according to a feature classification scheme,
wherein the feature classification scheme is generated by the CNN encoder (220) based on training data;
receiving (S322), at a ConvLSTM network (260), ConvLSTM input data comprising the plurality of feature maps generated by the CNN encoder; and
propagating (S350) the ConvLSTM input data through the ConvLSTM network (260) to generate a change map (270), wherein the change map comprises change data indicative of one or more changes across the plurality of images;
**characterized in that** the ConvLSTM input data is generated by:
providing (S330) a skip connection (240) between an input of the CNN encoder (220) and an input of the ConvLSTM network (260);
propagating (S322) a copy of the CNN input data to the input of the ConvLSTM network through the skip connection (240); and
convolving (S340) the data associated with each of the plurality of images in the copy of the CNN input data with its respective feature map generated by the CNN encoder, to generate the ConvLSTM input data.

2. The computer-implemented method according to claim 1, wherein the change data includes quantitative data indicative of the degree of the one or more changes across the plurality of images.

3. The computer-implemented method according to claim 1 or 2, wherein the change data includes a change classification of each pixel of a selected image of the plurality of images,
wherein for a given pixel of the selected image, the change classification of said pixel is indicative of whether the feature classification for said pixel is the same as or different from the feature classification for a corresponding pixel of another of the plurality of images.

4. The computer-implemented method according to claim 1, wherein the CNN input data includes amplitude data indicative of one or more amplitude values associated with each of the pixels of each of the plurality of images.

5. The computer-implemented method according to claim 1, wherein the feature classification scheme is a binary classification scheme configured to classify identified objects as belonging to either a first feature classification or a second feature classification

6. The computer-implemented method according to claim 5, wherein the training data used to train the neural network comprises data representative of both the first and second feature classifications, and wherein the data representative of the first feature classification within the training data is scarce relative to the data representative of the second feature classification;

7. The computer-implemented method according to claim 6, wherein the feature classification scheme is generated by training the CNN encoder (220), wherein training the CNN encoder includes:
pre-training (S410) the CNN encoder to generate preliminary maps based on the data representative of the second feature classification and the output of the CNN encoder; and
training (S420) the computing network by training both the CNN encoder and the ConvLSTM network based on the data representative of the first feature classification and the output of the ConvLSTM network, wherein the trained CNN encoder is configured to generate the plurality of feature maps according to the feature classification scheme and the trained ConvLSTM network is configured to generate change maps (260).

8. The computer-implemented method according to claim 1, wherein one or both of the CNN input data and the ConvLSTM input data further comprises phase data indicative of a respective phase value of each pixel of each image of the plurality of images, and wherein:
the feature classification of each pixel of each image by its respective feature map is based, at least in part, on said phase data; and/or
propagating the ConvLSTM input data through the ConvLSTM network includes convolving the phase data with the plurality of feature maps to generate the change map (260).

9. The computer-implemented method according to claim 1, wherein each of the plurality of images is an image of a common target imaged at respectively different times, such that identifying the one or more differences across the plurality of images is equivalent to identifying one or more changes over time of the subject.

10. The computer-implemented method according to claim 1 wherein the plurality of images comprises successive images and the method further comprises:
propagating the ConvLSTM input data through the ConvLSTM network (260) and convolving the ConvLSTM input data respectively associated with each of the successive images with the ConvLSTM input data associated with a respectively preceding image to generate successive change maps (270), wherein each successive change map is representative of a change between one of the plurality of images and a successive image.

11. The computer-implemented method according to claim 1, wherein each of the plurality of images is coherent with each of the other images.

12. The computer-implemented method according to claim 1, wherein each of the plurality of images is an image of a geographical area, and the feature classification scheme includes:
a first feature classification indicating that a pixel classified as such is representative of the presence of a predetermined geographical feature; and
a second feature classification indicating that a pixel classified as such is representative of the absence of the predetermined geographical feature,
wherein the method further comprises:
identifying areas where the presence/absence of the predetermined geographical feature changes based on the identified differences across the plurality of images; optionally wherein:
the first feature classification is a forest classification indicating that a pixel classified as such is representative of forested land, and
the second feature classification is a non-forest classification indicating that a pixel classified as such is representative of land that is not forested,
wherein the method further comprises:
identifying changes in sizes of areas of deforestation around forested land based on the identified differences across the plurality of images.

13. The computer-implemented method according to claim 1, wherein each of the plurality of images is generated by synthetic aperture radar imaging.

14. A computing system configured to identify one or more changes across a plurality of images by implementing the method of claim 1, the system comprising:
a convolutional neural network "CNN" encoder (220); configured to
receive (S310), at an input of the CNN encoder (220), CNN input data comprising the data associated with the plurality of images, and
propagate (S320) the CNN input data through the CNN encoder (220) to generate a plurality of feature maps (230), wherein each feature map comprises a feature classification of each pixel of a respective image of the plurality of images according to a feature classification scheme, wherein the feature classification scheme comprises a plurality of classifications and is generated by the CNN encoder based on training data;
a ConvLSTM network (260);
a data connection link between the CNN encoder and the ConvLSTM network; and
a skip connection (240) between the input of the CNN encoder and the input of the ConvLSTM network;
wherein the ConvLSTM network is (260) configured to:
receive (S322), at an input of the ConvLSTM network, via the data connection link, ConvLSTM input data comprising the plurality of feature maps generated by the CNN encoder, and
propagate (S350) the ConvLSTM input data through the ConvLSTM network to generate a change map (260), wherein the change map comprises change data indicative of one or more changes across the plurality of images;
and wherein the system is configured to generate the ConvLSTM input by:
propagating (S332) a copy of the CNN input data to the input of the ConvLSTM network through the skip connection; and
convolving (S340) each of the plurality of images in the copy of the CNN input data with its respective feature map generated by the CNN encoder.

15. A method of training the computing system of claim 14, the method comprising:
providing training data (40) comprising data representative of a first and second feature classification respectively;
pre-training (S410) the CNN encoder to generate preliminary maps based on the data representative of the second feature classification and the output of the CNN encoder; and
training (S420) both the CNN encoder and ConvLSTM network based on the data representative of the first feature classification and the output of the ConvLSTM network, wherein the trained CNN encoder is configured to generate the plurality of feature maps according to the feature classification scheme and the trained ConvLSTM network is configured to generate change maps.

16. The method according to claim 15, wherein,
during the training of the computing system, weights of the CNN encoder are frozen such that the pre-trained CNN encoder and the trained CNN encoder are configured with identical weights; and/or.
during the training of the computing system, weights of the CNN encoder are unfrozen such that the pre-trained CNN encoder and the trained CNN encoder may be configured with different weights.

17. A computer-readable medium comprising instructions which, when executed by a computer, cause the computer to carry out the method of any of claims 1 to 13 or 15 or 16.

## Patentansprüche

1. Computerimplementiertes Verfahren zum Identifizieren einer oder mehrerer Änderungen über eine Vielzahl von Bildern, wobei das Verfahren umfasst:
Empfangen (S310), an einem konvolutionellen neuronalen Netzwerk- "CNN" Encoder (220), von CNN-Eingangsdaten, die jedem Pixel jedes der Vielzahl von Bildern (210) zugeordnet sind;
Verbreiten (S320) der CNN-Eingangsdaten durch den CNN-Encoder (220), um eine Vielzahl von Merkmalskarten (230) zu erzeugen, wobei jede Merkmalskarte eine Merkmalsklassifizierung jedes Pixels eines jeweiligen Bildes der Vielzahl von Bildern gemäß einem Merkmalsklassifizierungsschema umfasst,
wobei das Merkmalsklassifizierungsschema vom CNN-Encoder (220) basierend auf Trainingsdaten erzeugt wird;
Empfangen (S322), an einem ConvLSTM-Netzwerk (260), von ConvLSTM-Eingangsdaten, die die Vielzahl von vom CNN-Encoder erzeugten Merkmalskarten umfassen; und
Verbreiten (S350) der ConvLSTM-Eingangsdaten durch das ConvLSTM-Netzwerk (260), um eine Änderungskarte (270) zu erzeugen, wobei die Änderungskarte Änderungsdaten umfasst, die eine oder mehrere Änderungen über die Vielzahl von Bildern angeben;
**dadurch gekennzeichnet, dass** die ConvLSTM-Eingangsdaten erzeugt werden durch:
Bereitstellen (S330) einer Skip-Verbindung (240) zwischen einem Eingang des CNN-Encoders (220) und einem Eingang des ConvLSTM-Netzwerks (260);
Verbreiten (S322) einer Kopie der CNN-Eingangsdaten an den Eingang des ConvLSTM-Netzwerks über die Skip-Verbindung (240); und
Falten (S340) der Daten, die jedem der Vielzahl von Bildern in der Kopie der CNN-Eingangsdaten zugeordnet sind, mit der jeweiligen Merkmalskarte, die vom CNN-Encoder erzeugt wird, um die ConvLSTM-Eingangsdaten zu erzeugen.

2. Computerimplementiertes Verfahren nach Anspruch 1, wobei die Änderungsdaten quantitative Daten beinhalten, die den Grad der einen oder mehreren Änderungen über die Vielzahl von Bildern angeben.

3. Computerimplementiertes Verfahren nach Anspruch 1 oder 2, wobei die Änderungsdaten eine Änderungsklassifizierung jedes Pixels eines ausgewählten Bildes der Vielzahl von Bildern beinhalten,
wobei für ein vorgegebenes Pixel des ausgewählten Bildes die Änderungsklassifizierung des Pixels angibt, ob die Merkmalsklassifizierung für das Pixel dieselbe wie die Merkmalsklassifizierung für ein entsprechendes Pixel eines anderen der Vielzahl von Bildern ist oder sich von dieser unterscheidet.

4. Computerimplementiertes Verfahren nach Anspruch 1, wobei die CNN-Eingangsdaten Amplitudendaten beinhalten, die einen oder mehrere Amplitudenwerte angeben, die jedem der Pixel jedes der Vielzahl von Bildern zugeordnet sind.

5. Computerimplementiertes Verfahren nach Anspruch 1, wobei es sich bei dem Merkmalsklassifizierungsschema um ein binäres Klassifizierungsschema handelt, das dazu konfiguriert ist, identifizierte Objekte entweder als einer ersten Merkmalsklassifizierung oder einer zweiten Merkmalsklassifizierung zugehörig zu klassifizieren.

6. Computerimplementiertes Verfahren nach Anspruch 5, wobei die zum Trainieren des neuronalen Netzwerks verwendeten Trainingsdaten Daten umfassen, die sowohl für die erste als auch die zweite Merkmalsklassifizierung repräsentativ sind, und wobei die Daten, die die erste Merkmalsklassifizierung repräsentieren, innerhalb der Trainingsdaten im Verhältnis zu den Daten, die die zweite Merkmalsklassifizierung repräsentieren, spärlich sind;

7. Computerimplementiertes Verfahren nach Anspruch 6, wobei das Merkmalsklassifizierungsschema durch Trainieren des CNN-Encoders (220) erzeugt wird, wobei Trainieren des CNN-Encoders beinhaltet:
Vortrainieren (S410) des CNN-Encoders, um basierend auf den Daten, die für die zweite Merkmalsklassifizierung repräsentativ sind, und der Ausgabe des CNN-Encoders vorläufige Karten zu erzeugen; und
Trainieren (S420) des Rechennetzwerks durch Trainieren sowohl des CNN-Encoders als auch des ConvLSTM-Netzwerks basierend auf den Daten, die für die erste Merkmalsklassifizierung repräsentativ sind, und der Ausgabe des ConvLSTM-Netzwerks, wobei der trainierte CNN-Encoder dazu konfiguriert ist, die Vielzahl von Merkmalskarten gemäß dem Merkmalsklassifizierungsschema zu erzeugen, und das trainierte ConvLSTM-Netzwerk dazu konfiguriert ist, Änderungskarten (260) zu erzeugen.

8. Computerimplementiertes Verfahren nach Anspruch 1, wobei eine oder beide der CNN-Eingangsdaten und der ConvLSTM-Eingangsdaten ferner Phasendaten umfassen, die einen jeweiligen Phasenwert jedes Pixels jedes Bildes der Vielzahl von Bildern angeben, und wobei:
die Merkmalsklassifizierung jedes Pixels jedes Bildes mit seiner jeweiligen Merkmalskarte zumindest teilweise auf den Phasendaten basiert; und/oder
Verbreiten der ConvLSTM-Eingangsdaten durch das ConvLSTM-Netzwerk Falten der Phasendaten mit der Vielzahl von Merkmalskarten beinhaltet, um die Änderungskarte (260) zu erzeugen.

9. Computerimplementiertes Verfahren nach Anspruch 1, wobei jedes der Vielzahl von Bildern ein Bild eines gemeinsamen Ziels ist, das zu jeweils unterschiedlichen Zeitpunkten abgebildet wurde, sodass Identifizieren des einen oder der mehreren Unterschiede über die Vielzahl von Bildern gleichbedeutend mit einem Identifizieren einer oder mehrerer Änderungen des Subjekts im Laufe der Zeit ist.

10. Computerimplementiertes Verfahren nach Anspruch 1, wobei die Vielzahl von Bildern aufeinanderfolgende Bilder umfasst und das Verfahren ferner umfasst:
Verbreiten der ConvLSTM-Eingangsdaten durch das ConvLSTM-Netzwerk (260) und Falten der ConvLSTM-Eingangsdaten, die jeweils jedem der aufeinanderfolgenden Bilder zugeordnet sind, mit den ConvLSTM-Eingangsdaten, die einem jeweiligen vorangehenden Bild zugeordnet sind, um aufeinanderfolgende Änderungskarten (270) zu erzeugen, wobei jede aufeinanderfolgende Änderungskarte für eine Änderung zwischen einem der Vielzahl von Bildern und einem nachfolgenden Bild repräsentativ ist.

11. Computerimplementiertes Verfahren nach Anspruch 1, wobei jedes der Vielzahl von Bildern mit jedem der anderen Bilder kohärent ist.

12. Computerimplementiertes Verfahren nach Anspruch 1, wobei jedes der Vielzahl von Bildern ein Bild einer geografischen Fläche ist und das Merkmalsklassifizierungsschema beinhaltet:
eine erste Merkmalsklassifizierung, die angibt, dass ein als solches klassifiziertes Pixel repräsentativ für das Vorhandensein eines vorbestimmten geografischen Merkmals ist; und
eine zweite Merkmalsklassifizierung, die angibt, dass ein als solches klassifiziertes Pixel repräsentativ für das Fehlen des vorbestimmten geografischen Merkmals ist, wobei das Verfahren ferner umfasst:
Identifizieren von Flächen, wo sich das Vorhandensein/Fehlen des vorbestimmten geografischen Merkmals basierend auf den identifizierten Unterschieden über die Vielzahl von Bildern ändert; wobei optional:
die erste Merkmalsklassifizierung eine Wald-Klassifizierung ist, die angibt, dass ein als solches klassifiziertes Pixel repräsentativ für Waldland ist, und
die zweite Merkmalsklassifizierung eine Nicht-Wald-Klassifizierung ist, die angibt, dass ein als solches klassifiziertes Pixel repräsentativ für Land ist, das nicht bewaldet ist,
wobei das Verfahren ferner umfasst:
Identifizieren von Änderungen der Größe von Entwaldungsflächen um Waldland, basierend auf den identifizierten Unterschieden über die Vielzahl von Bildern.

13. Computerimplementiertes Verfahren nach Anspruch 1, wobei jedes der Vielzahl von Bildern durch Bildgebung mit einem Radar mit synthetischer Apertur erzeugt wird.

14. Rechensystem, das dafür konfiguriert ist, eine oder mehrere Änderungen über eine Vielzahl von Bildern durch Implementieren des Verfahrens nach Anspruch 1 zu identifizieren, wobei das System umfasst:
einen konvolutionellen neuronalen Netzwerk- "CNN" Encoder (220); konfiguriert zum
Empfangen (S310), an einem Eingang des CNN-Encoders (220), von CNN-Eingangsdaten, die die Daten umfassen, die der Vielzahl von Bildern zugeordnet sind, und
Verbreiten (S320) der CNN-Eingangsdaten durch den CNN-Encoder (220), um eine Vielzahl von Merkmalskarten (230) zu erzeugen, wobei jede Merkmalskarte eine Merkmalsklassifizierung jedes Pixels eines jeweiligen Bildes der Vielzahl von Bildern gemäß einem Merkmalsklassifizierungsschema umfasst, wobei das Merkmalsklassifizierungsschema eine Vielzahl von Klassifizierungen umfasst und von dem CNN-Encoder basierend auf Trainingsdaten erzeugt wird;
ein ConvLSTM-Netzwerk (260);
eine Datenverbindung zwischen dem CNN-Encoder und dem ConvLSTM-Netzwerk; und
eine Skip-Verbindung (240) zwischen dem Eingang des CNN-Encoders und dem Eingang des ConvLSTM-Netzwerks;
wobei das ConvLSTM-Netzwerk (260) konfiguriert ist:
Empfangen (S322), an einem Eingang des ConvLSTM-Netzwerks, über die Datenverbindung, von ConvLSTM-Eingangsdaten, die die Vielzahl von vom CNN-Encoder erzeugten Merkmalskarten umfassen, und
Verbreiten (S350) der ConvLSTM-Eingangsdaten durch das ConvLSTM-Netzwerk, um eine Änderungskarte (260) zu erzeugen, wobei die Änderungskarte Änderungsdaten umfasst, die eine oder mehrere Änderungen über die Vielzahl von Bildern angeben;
und wobei das System dazu konfiguriert ist, den ConvLSTM-Eingang zu erzeugen durch:
Verbreiten (S332) einer Kopie der CNN-Eingangsdaten an den Eingang des ConvLSTM-Netzwerks über die Skip-Verbindung; und
Falten (S340) jedes der Vielzahl von Bildern in der Kopie der CNN-Eingangsdaten mit der jeweiligen Merkmalskarte, die vom CNN-Encoder erzeugt wird.

15. Verfahren zum Trainieren des Computersystems nach Anspruch 14, wobei das Verfahren umfasst:
Bereitstellen von Trainingsdaten (40), die Daten umfassen, die für eine erste beziehungsweise eine zweite Merkmalsklassifizierung repräsentativ sind;
Vortrainieren (S410) des CNN-Encoders, um basierend auf den Daten, die für die zweite Merkmalsklassifizierung repräsentativ sind, und der Ausgabe des CNN-Encoders vorläufige Karten zu erzeugen; und
Trainieren (S420) sowohl des CNN-Encoders als auch des ConvLSTM-Netzwerks basierend auf den Daten, die für die erste Merkmalsklassifizierung repräsentativ sind, und der Ausgabe des ConvLSTM-Netzwerks, wobei der trainierte CNN-Encoder dazu konfiguriert ist, die Vielzahl von Merkmalskarten gemäß dem Merkmalsklassifizierungsschema zu erzeugen, und das trainierte ConvLSTM-Netzwerk dazu konfiguriert ist, Änderungskarten zu erzeugen.

16. Verfahren nach Anspruch 15, wobei
während des Trainings des Rechensystems Gewichte des CNN-Encoders so eingefroren werden, dass der vortrainierte CNN-Encoder und der trainierte CNN-Encoder mit identischen Gewichten konfiguriert werden; und/oder
während des Trainings des Rechensystems Gewichte des CNN-Encoders so aufgetaut werden, dass der vortrainierte CNN-Encoder und der trainierte CNN-Encoder mit unterschiedlichen Gewichten konfiguriert werden können.

17. Computerlesbares Medium, das Anweisungen umfasst, die, wenn sie von einem Computer ausgeführt werden, den Computer veranlassen, das Verfahren nach einem der Ansprüche 1 bis 13 oder 15 oder 16 auszuführen.

## Revendications

1. Procédé mis en œuvre par ordinateur pour identifier un ou plusieurs changements entre une pluralité d'images, le procédé comprenant les étapes consistant à :
recevoir (S310), au niveau d'un encodeur à réseau neuronal convolutif « CNN » (220), des données d'entrée de CNN comprenant des données associées à chaque pixel de chacune de la pluralité d'images (210) ;
propager (S320) les données d'entrée de CNN à travers l'encodeur CNN (220) pour générer une pluralité de cartes de caractéristiques (230), dans lequel chaque carte de caractéristiques comprend une classification de caractéristiques de chaque pixel d'une image respective de la pluralité d'images selon un schéma de classification de caractéristiques,
dans lequel le schéma de classification de caractéristiques est généré par l'encodeur à CNN (220) sur la base de données d'entraînement ;
recevoir (S322), au niveau d'un réseau ConvLSTM (260), des données d'entrée de ConvLSTM comprenant la pluralité de cartes de caractéristiques générées par l'encodeur à CNN ; et
propager (S350) les données d'entrée de ConvLSTM à travers le réseau ConvLSTM (260) pour générer une carte de changement (270), dans lequel la carte de changement comprend des données de changement indiquant un ou plusieurs changements à travers la pluralité d'images ;
**caractérisé en ce que** les données d'entrée de ConvLSTM sont générées en :
fournissant (S330) une connexion de saut (240) entre une entrée de l'encodeur CNN (220) et une entrée du réseau ConvLSTM (260) ;
propageant (S322) une copie des données d'entrée de CNN à l'entrée du réseau ConvLSTM via la connexion de saut (240) ; et
convolutionnant (S340) les données associées à chacune de la pluralité d'images de la copie des données d'entrée de CNN avec sa carte de caractéristiques respective générée par l'encodeur CNN, pour générer les données d'entrée de ConvLSTM.

2. Procédé mis en œuvre par ordinateur selon la revendication 1, dans lequel les données de changement incluent des données quantitatives indiquant le degré des un ou plusieurs changements dans la pluralité d'images.

3. Procédé mis en œuvre par ordinateur selon la revendication 1 ou 2, dans lequel les données de changement incluent une classification de changement de chaque pixel d'une image sélectionnée de la pluralité d'images,
dans lequel, pour un pixel donné de l'image sélectionnée, la classification de changement dudit pixel indique si la classification de caractéristiques dudit pixel est identique ou différente de la classification de caractéristiques d'un pixel correspondant d'une autre image de la pluralité d'images.

4. Procédé mis en œuvre par ordinateur selon la revendication 1, dans lequel les données d'entrée de CNN incluent des données d'amplitude indicatives d'une ou plusieurs valeurs d'amplitude associées à chacun des pixels de chacune de la pluralité d'images.

5. Procédé mis en œuvre par ordinateur selon la revendication 1, dans lequel le schéma de classification de caractéristiques est un schéma de classification binaire configuré pour classer des objets identifiés comme appartenant soit à une première classification de caractéristiques, soit à une seconde classification de caractéristiques.

6. Procédé mis en œuvre par ordinateur selon la revendication 5, dans lequel les données d'entraînement utilisées pour entraîner le réseau neuronal comprennent des données représentatives des première et seconde classifications de caractéristiques, et dans lequel les données représentatives de la première classification de caractéristiques au sein des données d'entraînement sont rares par rapport aux données représentatives de la seconde classification de caractéristiques.

7. Procédé mis en œuvre par ordinateur selon la revendication 6, dans lequel le schéma de classification de caractéristiques est généré par l'apprentissage de l'encodeur CNN (220), dans lequel l'apprentissage de l'encodeur CNN inclut les étapes consistant à :
pré-entraîner (S410) l'encodeur CNN pour générer des cartes préliminaires sur la base des données représentatives de la seconde classification de caractéristiques et la sortie de l'encodeur CNN ; et
entraîner (S420) le réseau informatique en entraînant à la fois l'encodeur CNN et le réseau ConvLSTM sur la base des données représentatives de la première classification de caractéristiques et la sortie du réseau ConvLSTM, dans lequel l'encodeur CNN entraîné est configuré pour générer la pluralité de cartes de caractéristiques selon le schéma de classification de caractéristiques et le réseau ConvLSTM entraîné est configuré pour générer des cartes de changement (260).

8. Procédé mis en œuvre par ordinateur selon la revendication 1, dans lequel une ou les deux parmi les données d'entrée de CNN et les données d'entrée de ConvLSTM comprennent en outre des données de phase indiquant une valeur de phase respective de chaque pixel de chaque image de la pluralité d'images, et dans lequel :
la classification de caractéristiques de chaque pixel de chaque image par sa carte de caractéristiques respective est basée, au moins en partie, sur lesdites données de phase ; et/ou
la propagation des données d'entrée de ConvLSTM à travers le réseau ConvLSTM inclut la convolution des données de phase avec la pluralité de cartes de caractéristiques pour générer la carte de changement (260).

9. Procédé mis en œuvre par ordinateur selon la revendication 1, dans lequel chacune de la pluralité d'images est une image d'une cible commune imagée à des moments respectivement différents, de sorte que l'identification des une ou plusieurs différences entre la pluralité d'images équivaut à identifier un ou plusieurs changements dans le temps du sujet.

10. Procédé mis en œuvre par ordinateur selon la revendication 1, dans lequel la pluralité d'images comprend des images successives et le procédé comprend en outre les étapes consistant à :
propager les données d'entrée de ConvLSTM à travers le réseau ConvLSTM (260) et convoluer les données d'entrée de ConvLSTM associées respectivement à chacune des images successives avec les données d'entrée de ConvLSTM associées à une image précédente respective pour générer des cartes de changement successives (270), dans lequel chaque carte de changement successive est représentative d'un changement entre l'une de la pluralité d'images et une image successive.

11. Procédé mis en œuvre par ordinateur selon la revendication 1, dans lequel chacune de la pluralité d'images est cohérente avec chacune des autres images.

12. Procédé mis en œuvre par ordinateur selon la revendication 1, dans lequel chacune de la pluralité d'images est une image d'une zone géographique, et le schéma de classification de caractéristiques inclut :
une première classification de caractéristiques indiquant qu'un pixel classé comme tel est représentatif de la présence d'une caractéristique géographique prédéterminée ; et
une seconde classification de caractéristiques indiquant qu'un pixel classé comme tel est représentatif de l'absence de la caractéristique géographique prédéterminée, dans lequel le procédé comprend en outre l'étape consistant à :
identifier des zones où la présence/l'absence des changements de caractéristiques géographiques prédéterminés sur la base des différences identifiées dans la pluralité d'images ; facultativement dans lequel :
la première classification de caractéristiques est une classification forestière indiquant qu'un pixel classé comme tel est représentatif d'un terrain forestier, et
la seconde classification de caractéristiques est une classification non forestière indiquant qu'un pixel classé comme tel est représentatif d'un terrain non forestier,
dans lequel le procédé comprend en outre l'étape consistant à :
identifier les changements de taille des zones de déforestation autour des terrains forestiers sur la base des différences identifiées dans la pluralité d'images.

13. Procédé mis en œuvre par ordinateur selon la revendication 1, dans lequel chacune de la pluralité d'images est générée par imagerie radar à synthèse d'ouverture.

14. Système informatique configuré pour identifier un ou plusieurs changements dans une pluralité d'images en mettant en œuvre le procédé de la revendication 1, le système comprenant :
un encodeur à réseau neuronal convolutif « CNN » (220) ; configuré pour
recevoir (S310), au niveau d'une entrée de l'encodeur CNN (220), des données d'entrée de CNN comprenant les données associées à la pluralité d'images, et
propager (S320) les données d'entrée de CNN à travers l'encodeur CNN (220) pour générer une pluralité de cartes de caractéristiques (230), dans lequel chaque carte de caractéristiques comprend une classification de caractéristiques de chaque pixel d'une image respective de la pluralité d'images selon un schéma de classification de caractéristiques, dans lequel le schéma de classification de caractéristiques comprend une pluralité de classifications et est généré par l'encodeur CNN sur la base de données d'entraînement ;
un réseau ConvLSTM (260) ;
une liaison de connexion de données entre l'encodeur CNN et le réseau ConvLSTM ; et
une connexion de saut (240) entre l'entrée de l'encodeur CNN et l'entrée du réseau ConvLSTM ;
dans lequel le réseau ConvLSTM (260) est configuré pour :
recevoir (S322), au niveau d'une entrée du réseau ConvLSTM, via la liaison de connexion de données, les données d'entrée de ConvLSTM comprenant la pluralité de cartes de caractéristiques générées par l'encodeur CNN, et
propager (S350) les données d'entrée de ConvLSTM à travers le réseau ConvLSTM pour générer une carte de changement (260), dans lequel la carte de changement comprend des données de changement indiquant un ou plusieurs changements à travers la pluralité d'images ;
et dans lequel le système est configuré pour générer l'entrée ConvLSTM en :
propageant (S332) une copie des données d'entrée de CNN à l'entrée du réseau ConvLSTM via la connexion de saut ; et
convolutionnant (S340) chacune de la pluralité d'images de la copie des données d'entrée de CNN avec sa carte de caractéristiques respective générée par l'encodeur CNN.

15. Procédé d'entraînement du système informatique selon la revendication 14, le procédé comprenant les étapes consistant à :
fournir des données d'entraînement (40) comprenant des données représentatives d'une première et d'une seconde classification de caractéristiques respectivement ;
pré-entraîner (S410) l'encodeur CNN pour générer des cartes préliminaires sur la base des données représentatives de la seconde classification de caractéristiques et la sortie de l'encodeur CNN ; et
entraîner (S420) à la fois l'encodeur CNN et le réseau ConvLSTM sur la base des données représentatives de la première classification de caractéristiques et la sortie du réseau ConvLSTM, dans lequel l'encodeur CNN entraîné est configuré pour générer la pluralité de cartes de caractéristiques selon le schéma de classification de caractéristiques et le réseau ConvLSTM entraîné est configuré pour générer des cartes de changement.

16. Procédé selon la revendication 15, dans lequel
lors de l'entraînement du système informatique, des poids de l'encodeur CNN sont gelés de sorte que l'encodeur CNN pré-entraîné et l'encodeur CNN entraîné soient configurés avec des poids identiques ; et/ou
lors de l'entraînement du système informatique, les poids de l'encodeur CNN sont dégelés de sorte que l'encodeur CNN pré-entraîné et l'encodeur CNN entraîné puissent être configurés avec des poids différents.

17. Support lisible par ordinateur comprenant des instructions qui, lorsqu'elles sont exécutées par un ordinateur, amènent l'ordinateur à réaliser le procédé selon l'une quelconque des revendications 1-13 ou 15 ou 16.
